# EUROPÄISCHE PATENTSCHRIFT

(11) **EP 0 562 227 B1**
(45) Veröffentlichungstag und Bekanntmachung des Hinweises auf die Patenterteilung: **13.03.1996**
(21) Anmeldenummer: 93100653.0
(22) Anmeldetag: 18.01.1993
(51) Int. Cl.: F16H 3/08

(54) **Gangschaltgetriebe eines Kraftfahrzeugs**
Gearbox for a motor vehicle
Boîte de vitesse pour une voiture

(30) Priorität: 25.02.1992 DE 4205668
(43) Veröffentlichungstag der Anmeldung: 29.09.1993
(73) Patentinhaber: Dr.Ing.h.c. F. Porsche Aktiengesellschaft, D-70435 Stuttgart (DE)
(72) Erfinder: Müller, Robert, W-7256 Mönsheim (DE)

(56) Entgegenhaltungen:
- DE-B- 1 580 101
- DE-C- 934 514

## Beschreibung

Die Erfindung betrifft ein Gangschaltgetriebe eines Kraftfahrzeugs nach dem Oberbegriff des Anspruchs 1.

In dem Buch "Zahnradgetriebe", Johannes Loomann, Springer-Verlag Berlin 1988, Seite 10, sind Gruppengetriebe beschrieben, die ein meistens zweigängiges, dem normalen Gangschaltgetriebe vor- oder nachgeschaltetes Stufengetriebe darstellen. Sie dienen dazu, durch Mehrfachnutzung von Radsätzen die Gangzahl und den Übersetzungsbereich des Getriebes zu erhöhen. Es wird dort ausgesagt, daß bei Zusammenarbeit mit einem Gruppengetriebe die Übersetzungssprünge ϕ in allen Stufen ungefähr gleich sein müssen, d.h. eine geometrische Reihe bilden müssen, um ungleichmäßig abwechselnde große und kleine Übersetzungsprünge zu vermeiden.

Ein gattungsgemäßes Gangschaltgetriebe ist beispielsweise aus der DE-B-15 80 101 bekannt. Bei diesem Gangschaltgetriebe ist in konventioneller Weise ein Hauptgetriebe mit einem Nachschaltgetriebe schaltbar gekoppelt. Mit dem Hauptgetriebe können dabei über zwei doppelt wirkende Synchronisierkupplungen in jeder der beiden Schaltstellungen des nachgeschalteten Getriebestufe vier Vorwärtsgänge geschaltet werden. Durch das Nachschaltgetriebe werden diese vier Vorwärtsgänge in der ersten Schaltstellung mit einer Langsamschaltstufe gekoppelt und in der anderen Schaltstellung mit einer schnellen Schaltstufe. Damit ergeben sich vier herkömmlich geschaltete und abgestufte langsame Vorwärtsgänge sowie vier herkömmlich geschaltete und abgestufte schnelle Vorwärtsgänge.

Es ist die Aufgabe der Erfindung, ein Gangschaltgetriebe mit Gruppengetriebe zu schaffen, das abweichend von der geometrischen Stufung zu den unteren Gängen hin eine sich erhöhende Gangstufung ϕ erbringt.

Zur Lösung dieser Aufgabe dienen die kennzeichnenden Merkmale des Anspruchs 1. Wenn eine erste Gruppenschaltung zwischen den benachbarten Gängen G1 und G2 und eine zweite Gruppenschaltung zwischen den nicht benachbarten Gängen G3 und G5 realisiert ist, läßt sich eine zu den unteren Gängen hin ansteigende, progressive Stufung erzielen, ohne daß ungleichmäßig abwechselnde Übersetzungssprünge auftreten. Diese progressive Stufung ist erwünscht, um in den unteren Gängen eine größere Spreizung zu erreichen.

In einer bevorzugten Ausführungsform der Erfindung bestehen bei einem 6-Gang-Getriebe die Gänge G2, G4, G5 und G6 jeweils aus einem Festrad-LosradRadpaar. Der erste Gang G1 ist durch das Radpaar von G2 und den als Gruppengetrieb nachgeschalteten Gängen G4 und G6, der dritte Gang G3 durch das Radpaar von G5 und den als Gruppengetriebe geschalteten Gängen G4 und G6 gebildet. Da als Gruppengetriebe die in Gangschaltgetriebe vorhandenen ...

Radpaare von G4 und G6 bereits verwendet werden, sind zusätzliche Radpaare entbehrlich, so daß die Herstellkosten und der Bauraum des Getriebes sehr klein gehalten werden können.

Ein Ausführungsbeispiel der Erfindung ist in der Zeichnung schematisch dargestellt und wird nachfolgend erläutert.

Es zeigen:
- Fig. 1: Getriebeschema und Kraftfluß im ersten Gang,
- Fig. 2: Getriebeschema und Kraftfluß im zweiten Gang,
- Fig. 3: Getriebeschema und Kraftfluß im dritten Gang,
- Fig. 4: Getriebeschema und Kraftfluß im vierten Gang,
- Fig. 5: Getriebeschema und Kraftfluß im fünften Gang,
- Fig. 6: Getriebeschema und Kraftfluß im sechsten Gang,

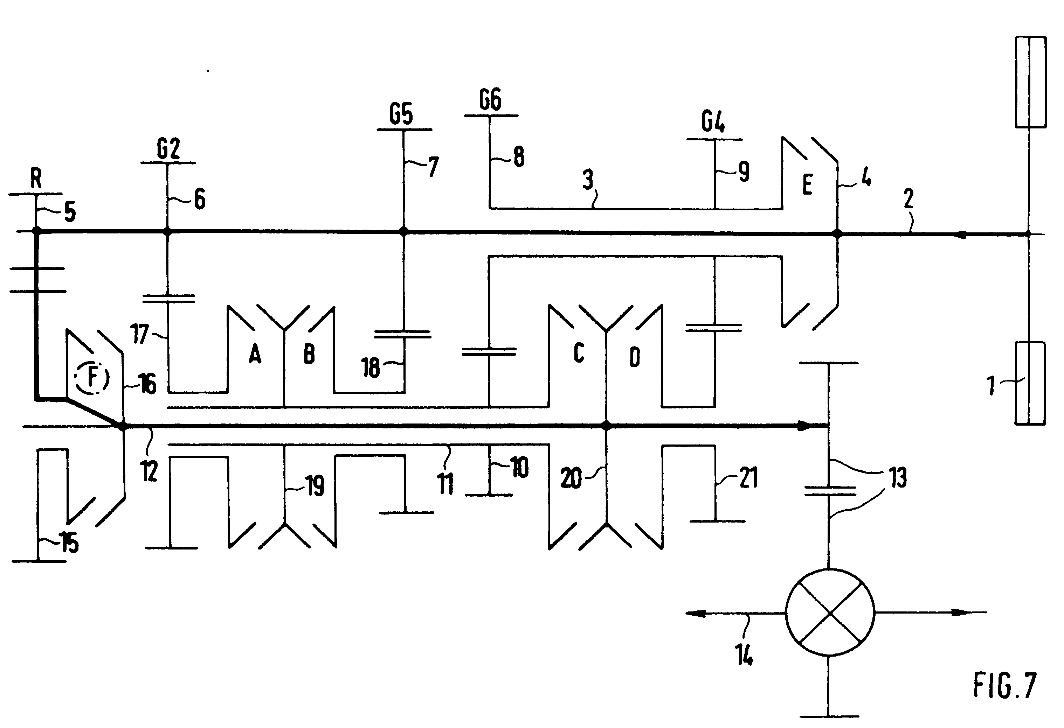

- Fig. 7: Getriebeschema und Kraftfluß im Rückwärtsgang,
- Fig. 8: Schaubild der Getriebestufung.

Über eine Kupplung 1 wird eine zentrale Eingangswelle 2 des Gangschaltgetriebes angetrieben. Auf ihr ist eine Hohlwelle 3 drehbar gelagert, die durch eine als halbe Synchronisierkupplung ausgeführte Kupplung E drehmomentübertragend mit der Eingangswelle 2 verbindbar ist. Eine sie betätigende Schiebemuffe 4 ist gegenüber der Eingangswelle drehfest und längsverschieblich.

Auf der Eingangswelle 2 sind in dieser Reihenfolge das Festrad 5 des Rückwärtsganges R, das Festrad 6 des zweiten Ganges G2 und das Festrad 7 des fünften Ganges G5 angeordnet. Anschließend folgen auf der Hohlwelle 3 das Festrad 8 des sechsten Ganges G6 und das Festrad 9 des vierten Ganges G4. Ein mit dem Festrad 8 kämmendes Festrad 10 ist an einer zweiten Hohlwelle 11 befestigt, in der zentral eine Ausgangswelle 12 gelagert ist. Mit der Ausgangswelle 12 wird über ein endseitiges Radpaar 13 eine Fahrzeugachse 14 angetrieben. An der anderen Seite der Ausgangswelle 12 ist der Radsatz des Rückwärtsganges angeordnet, wobei das Festrad 5 der Eingangswelle 2 über ein nicht gezeichnetes Zwischenrad mit einem auf der Ausgangswelle 12 gelagerten Losrad 15 in Eingriff steht. Das Losrad 15 ist durch eine halbe Synchronisierkupplung F, deren Schaltmuffe 16 zur Ausgangswelle 12 drehfest ist, mit der Ausgangswelle 12 kuppelbar.

Mit dem Festrad 6 von G2 kämmt ein auf der Hohlwelle 11 gelagertes Losrad 17, mit dem Festrad 7 von G5 ein ebenfalls auf der Hohlwelle 11 gelagertes Losrad 18. Mit einer Synchronisierkupplung A-B, deren Schiebemuffe 19 zur Hohlwelle 11 drehfest ist, ist durch Kupplung A das Losrad 17, durch Kupplung B das Losrad 18 mit der Hohlwelle 11 kuppelbar.

Mit einer weiteren Synchronisierkupplung C-D deren Schiebemuffe 20 zur Ausgangswelle 12 drehfest ist, ist die Hohlwelle 11 über Kupplung C mit der Ausgangswelle 12 kuppelbar. Über Kupplung D ist ein auf der Ausgangswelle 12 gelagertes Losrad 21, das mit dem Festrad 9 von G4 kämmt, mit der Ausgangswelle 12 verbindbar.

Wie nachfolgende Tabelle zeigt, werden zum Schalten aller Vorwärtsgänge G1 bis G6 gleichzeitig zwei Kupplungen in Schließlage gebracht.

| Gang | Kupplungen | A | B | C | D | E | F |
|---|---|---|---|---|---|---|---|
| 1. | A D | X | | | X | | |
| 2. | A C | X | | X | | | |
| 3. | B D | | X | | X | | |
| 4. | E D | | | | X | X | |
| 5. | B C | | X | X | | | |
| 6. | E C | | | X | | X | |
| R | F | | | | | | X |

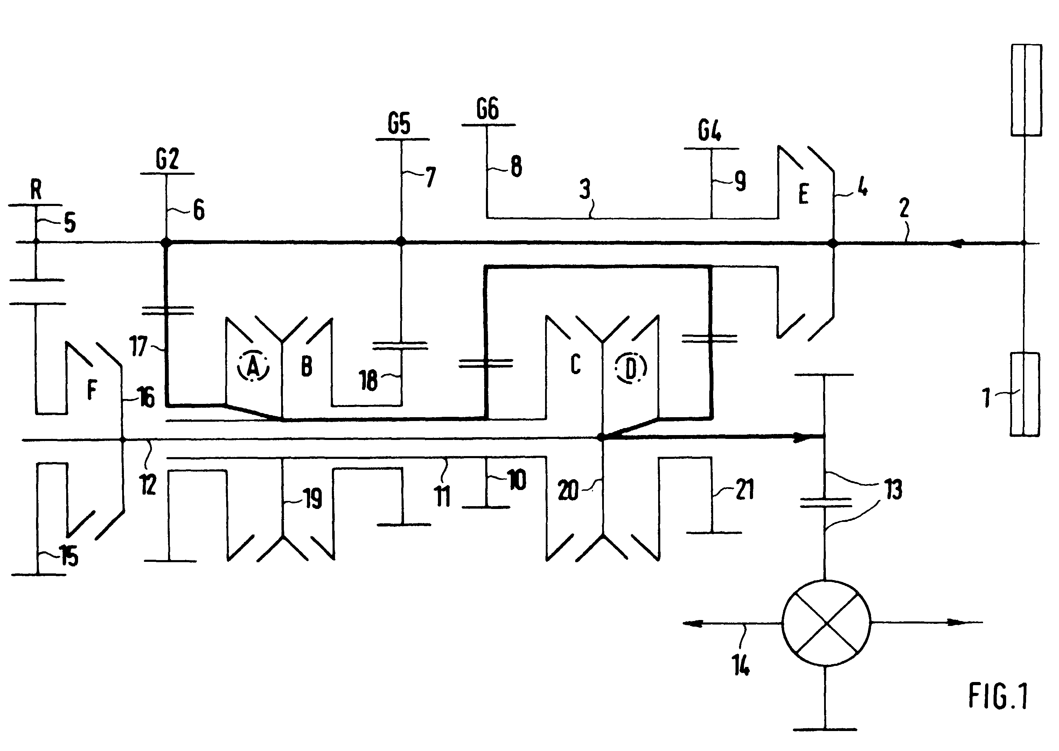

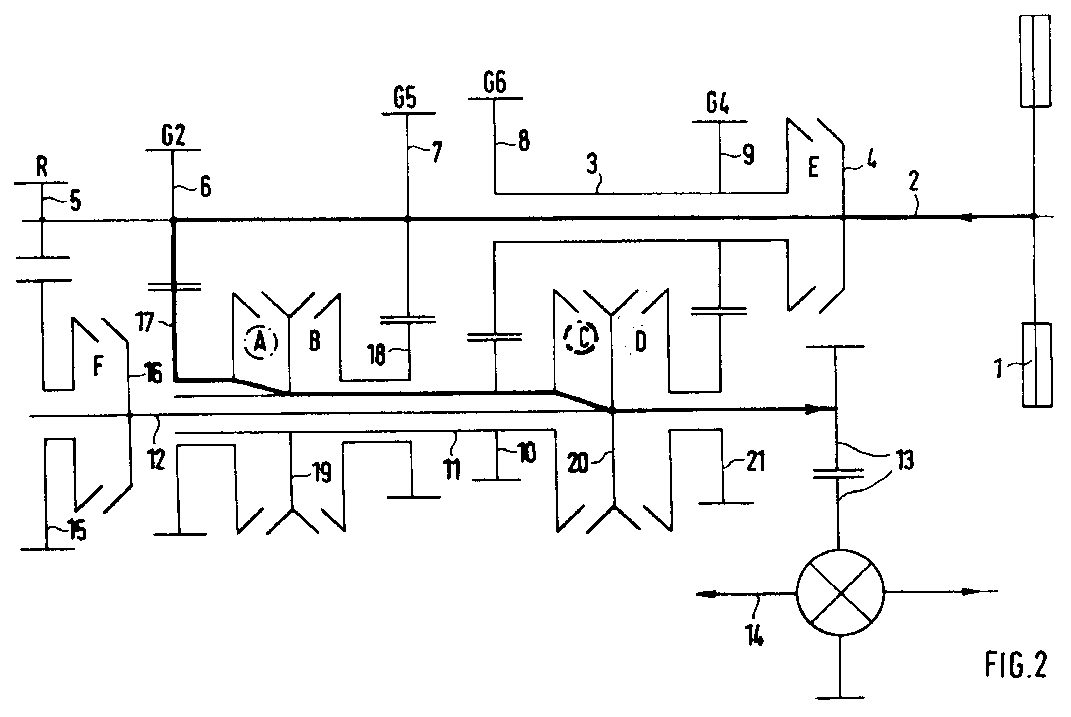

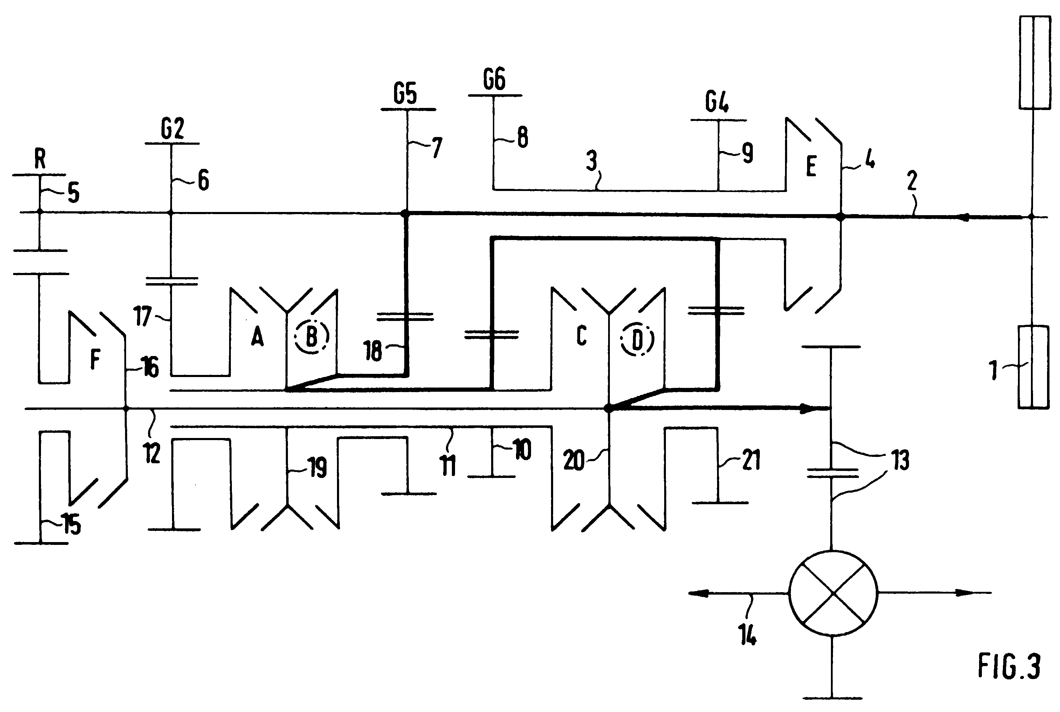

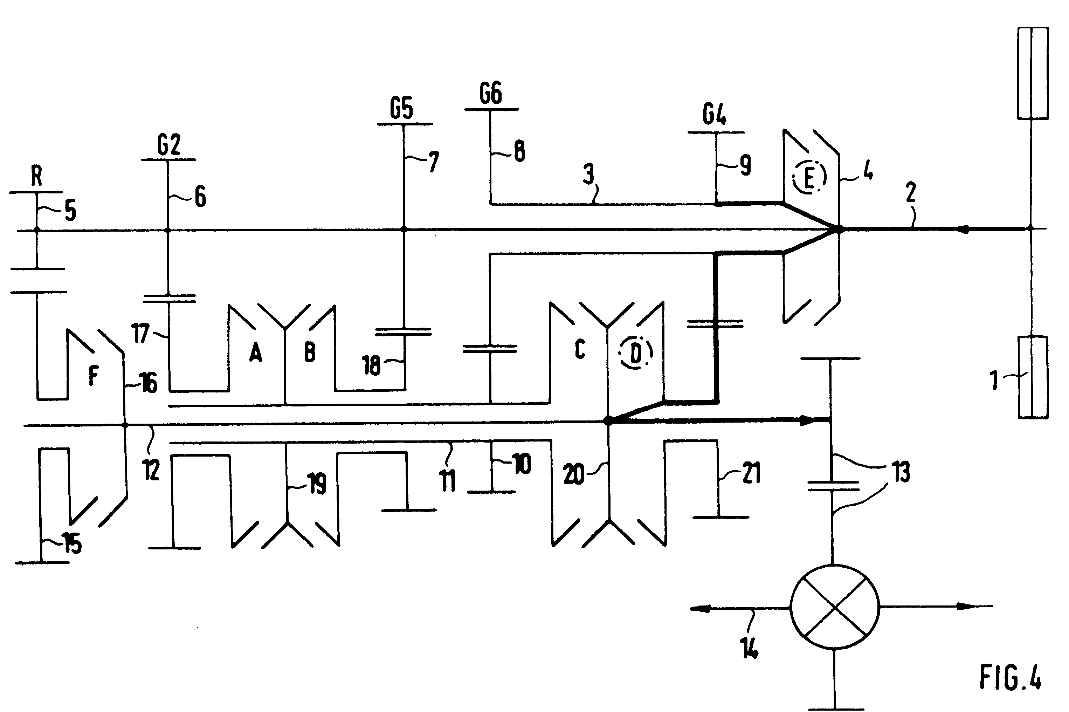

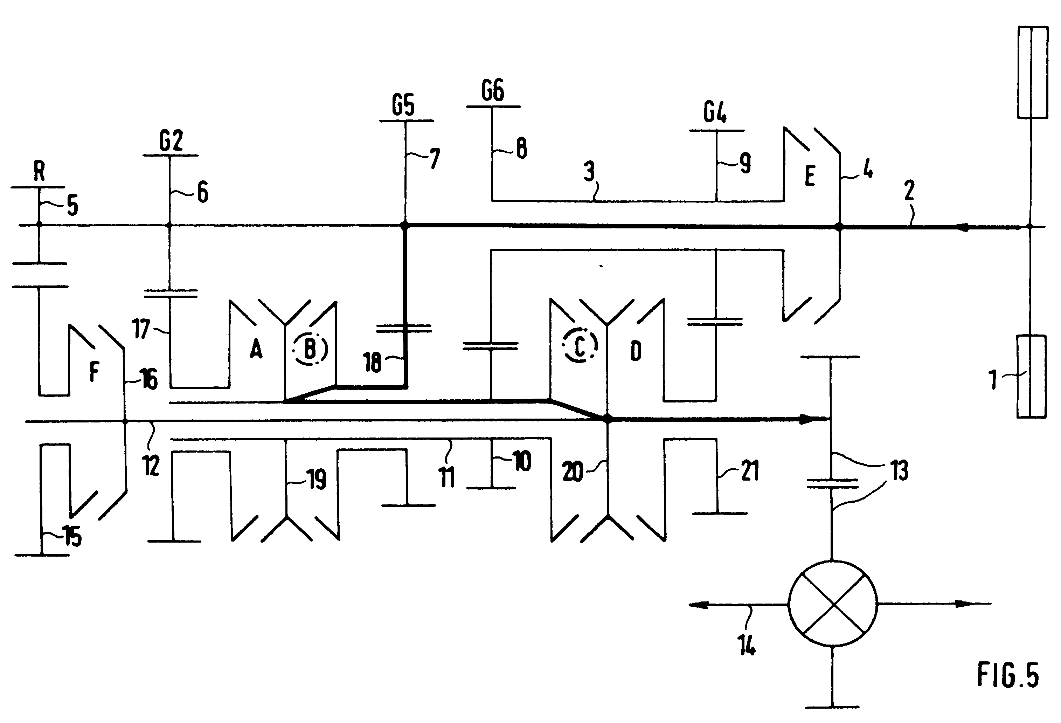

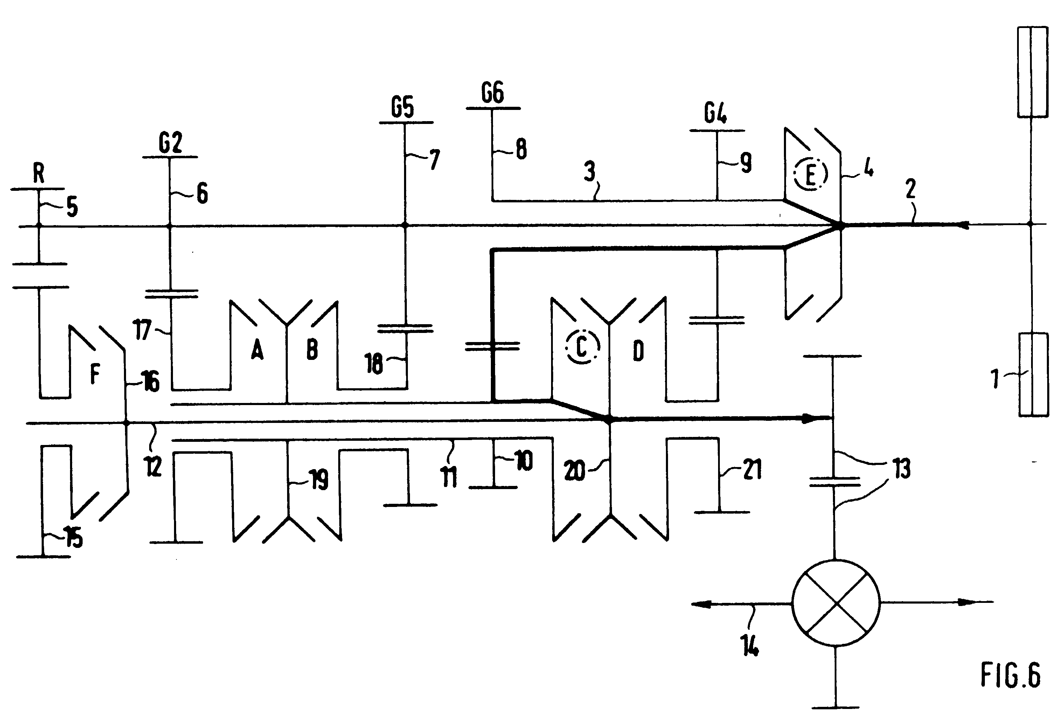

In den Figuren 1 - 6 ist in dieser Numerierung der Kraftfluß im Gangschaltgetriebe bei den geschalteten Gängen 1 bis 6 eingezeichnet. Die jeweils beteiligten Kupplungen sind strichpunktiert umrandet. Die Synchronisierkupplung C-D ist beim Schalten aller Vorwärtsgänge beteiligt. Da sie in ihrer neutralen Nullage den Getriebeleerlauf ergibt, ist es möglich, aus allen geschalteten Gängen direkt in den Leerlauf und umgekehrt aus dem Leerlauf direkt in jeden beliebigen Gang zu schalten.

Die Gänge G2, G5, G6 und G4 bestehen jeweils aus einem Radpaar. Der Gang G1 wird durch das Radpaar 6, 17 von G2 und den als Gruppengetriebe dahintergeschalteten Gängen G4 und G6 gebildet. Zusammen mit dem Radpaar 7, 18 von G5 bilden die Gänge G4 und G6 den dritten Gang G3.

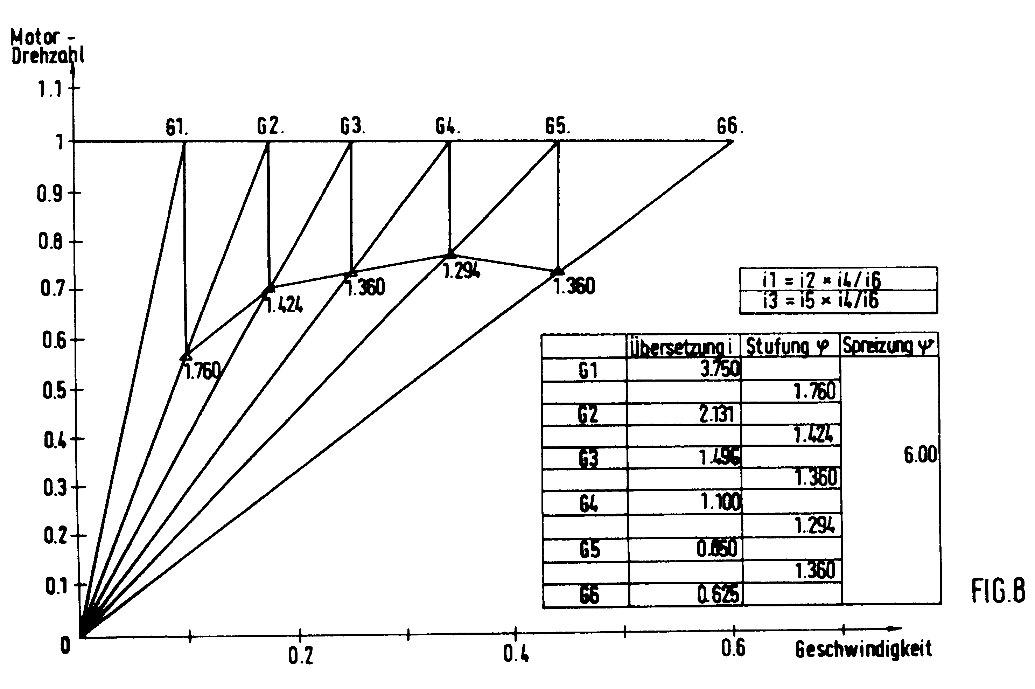

Wie aus dem Schaubild Fig. 8 deutlich wird, ist eine progressive Getriebestufung erreicht. Hierbei ist unter Verwendung vorhandener Zahnradpaare eine erste Gruppenschaltung zwischen den benachbarten Getriebegängen G1 ung G2 und eine zweite Gruppenschaltung zwischen den nicht benachbarten Getriebegängen G3 ung G5 realisiert.

Die dargestellte Anordnung ist als beispielhaft anzusehen. Je nach Anforderung (z.B. Quereinbau, Längseinbau, besonders kurzer Radsatz, kostengünstigste Anordnung etc.) sind im Rahmen der Erfindung unterschiedliche Anordnungen möglich.

## Patentansprüche

1. Gangschaltgetriebe eines Kraftfahrzeuges mit einer Eingangswelle (2) und einer parallelen Ausgangswelle (12) mit mehreren Zahnradpaaren, mit mehreren durch Synchronisierkupplungen schaltbaren Vorwärtsgängen (G1 - G6) und einem Rückwärtsgang (R), gekennzeichnet durch
- ein erstes Zahnradpaar (6/17), das in einer ersten Gruppenschaltung zum Schalten zweier benachbarter Getriebegänge doppelt genutzt wird, und
- ein zweites Zahnradpaar (7/18), das in einer zweiten Gruppenschaltung zum Schalten zweier nicht benachbarter Getriebegänge doppelt genutzt wird, wodurch eine progressive Gangstufung realisiert ist,
- wobei alle Vorwärtsgänge so angeordnet sind, daß sie nur durch gleichzeitiges Schließen zweier ihnen zugeordneter Synchronisierkupplungen schaltbar sind.

2. Gangschaltgetriebe nach Anspruch 1, dadurch gekennzeichnet, daß beim Schalten aller Vorwärtsgänge eine Synchronisierkupplung (C-D) beteiligt ist, die je nach Stellung ihrer Schiebemuffe (20) eine von zwei Schließlagen einnimmt und in ihrer neutralen Mittellage den Getriebe-Leerlauf ergibt.

3. Gangschaltgetriebe nach Anspruch 1 oder 2 mit sechs Vorwärtsgängen, dadurch gekennzeichnet, daß die Gänge G2, G4, G5 und G6 jeweils aus einem Radpaar (6/17, 9/21, 7/18 und 8/10) bestehen, wogegen der erste Gang G1 durch das Radpaar (6/17) des Ganges G2 und den als Gruppengetriebe geschalteten Gängen G4 und G6, der dritte Gang G3 durch das Radpaar (7/18) des Ganges G5 und den als Gruppengetriebe geschalteten Gängen G4 und G6 gebildet ist.

4. Gangschaltgetriebe nach einem der vorangegangenen Ansprüche, gekennzeichnet durch eine auf der zentralen Eingangswelle (2) gelagerten ersten Hohlwelle (3), die über das Radpaar (8/10) eine parallele zweite Hohlwelle (11) antreibt, in der die zentrale Ausgangswelle (12) gelagert ist, wobei das Radpaar (8/10) den sechsten Getriebegang G6 bildet.

5. Gangschaltgetriebe nach Anspruch 3 und 4, dadurch gekennzeichnet, daß auf der Eingangswelle (2) die Festräder (6, 7) der Gänge G2 und G5 sowie auf der ersten Hohlwelle (3) die Festräder (8, 9) der Gänge G6 und G4 in dieser Reihenfolge angeordnet sind.

6. Gangschaltgetriebe nach Anspruch 4, dadurch gekennzeichnet, daß die erste Hohlwelle (3) mittels einer Synchronisierkupplung (E) mit der Eingangswelle (2) und die zweite Hohlwelle (11) mittels einer weiteren Synchronisierkupplung (C) mit der Ausgangswelle (12) kuppelbar ist.

7. Gangschaltgetriebe nach einem der vorangegangenen Ansprüche, dadurch gekennzeichnet, daß auf der zweiten Hohlwelle (11) die Losräder (17, 18) des zweiten und des fünften Ganges G2 und G5 gelagert und mit ihr durch Synchronisierkupplungen (A) und (B) verbindbar sind, wobei diese Losräder (17, 18) mit den Festrädern (6, 7) der Eingangswelle (2) kämmen.

8. Gangschaltgetriebe nach einem der vorangegangenen Ansprüche, dadurch gekennzeichnet, daß auf der Ausgangswelle (12) an ihrer einen Seite das Losrad (21) des Ganges G4 gelagert ist und mit dem zugehörigen, auf der ersten Hohlwelle (3) sitzenden Festrad (9) kämmt, und daß an der anderen Seite der Ausgangswelle (12) das Losrad (15) des Rückwärtsganges (R) gelagert ist, das über ein Zwischenrad mit einem Festrad (5) der Eingangswelle (2) in Eingriff steht und mittels einer Synchronisierkupplung (F) mit der Ausgangswelle (12) kuppelbar ist.

9. Gangschaltgetriebe nach einem der vorangegangenen Ansprüche 1 bis 7, dadurch gekennzeichnet, daß die Synchronisierkupplungen (E und F) zu einer Doppelkupplung zusammengefaßt sind und zusammen mit dem Radsatz des Rückwärtsganges (R) zwischen den Gängen G5 und G6 angeordnet ist.

10. Gangschaltgetriebe nach einem der vorangegangenen Ansprüche mit sechs Vorwärtsgängen der Gangübersetzungen i1, i2, i3, i4, i5, i6, dadurch gekennzeichnet, daß für die progressive Gangstufung die Beziehung gilt:
i1/i2 = i3/i5 = i4/i6 = i3/i4 · i4/i5.

11. Gangschaltgetriebe nach Anspruch 1, dadurch gekennzeichnet, daß die Größe der Stufensprünge zu den unteren Getriebegängen (G2, G1) hin kontinuierlich ansteigt.

## Claims

1. A gear-change transmission of a motor vehicle, comprising an input shaft (2) and a parallel output shaft (12) with several gear wheel pairs, several forward gears (G1 - G6) engageable by means of synchronizing clutches and a reverse gear (R), characterized by
- a first gear wheel pair (6/17) which is used twice in a first group gear-change in order to engage two adjacent transmission gears, and
- a second gear wheel pair (7/18) which is used twice in a second group gear-change in order to engage two non-adjacent transmission gears, thereby producing progressive gear stepping,
- all the forward gears being arranged in such a way that they may only be engaged by the simultaneous actuation of two synchronizing clutches associated therewith.

2. A gear-change transmission according to claim 1, characterized in that when all forward gears are engaged, a synchronizing clutch (C-D) is involved which, depending on the position of its sliding sleeve (20), adopts one of two actuation positions and in its neutral middle position produces transmission idling.

3. A gear-change transmission according to claim 1 or 2 comprising six forward gears, characterized in that the gears G2, G4, G5 and G6 each consist of a wheel pair (6/17, 9/21, 7/18 and 8/10), whereas the first gear G1 is formed by the wheel pair (6/17) of the gear G2 and the gears G4 and G6 engaged as a group gear, and the third gear G3 is formed by the wheel pair (7/18) of the gear G5 and the gears G4 and G6 engaged as a group gear.

4. A gear-change transmission according to one of the preceding claims, characterized by a first hollow shaft (3) mounted on the central input shaft (2), the said hollow shaft driving via the wheel pair (8/10) a parallel second hollow shaft (11) in which the central output shaft (12) is mounted, the wheel pair (8/10) forming the sixth transmission gear G6.

5. A gear-change transmission according to claim 3 and 4, characterized in that the fixed wheels (6, 7) of the gears G2 and G5 are arranged on the input shaft (2) and the fixed wheels (8, 9) of the gears G6 and G4 are arranged on the first hollow shaft (3), in that order.

6. A gear-change transmission according to claim 4, characterized in that the first hollow shaft (3) may be coupled by means of a synchronizing clutch (E) with the input shaft (2), and the second hollow shaft (11) may be coupled by means of a further synchronizing clutch (C) with the output shaft (12).

7. A gear-change transmission according to one of the preceding claims, characterized in that the loose wheels (17, 18) of the second and the fifth gear G2 and G5 are mounted on the second hollow shaft (11) and may be connected thereto by means of synchronizing clutches (A) and (B), these loose wheels (17, 18) meshing with the fixed wheels (6, 7) of the input shaft (2).

8. A gear-change transmission according to one of the preceding claims, characterized in that the loose wheel (21) of the gear G4 is mounted on the output shaft (12) on one side thereof and meshes with the associated fixed wheel (9) seated on the first hollow shaft (3), and in that the loose wheel (15) of the reverse gear (R) is mounted on the other side of the output shaft (12), which loose wheel is in engagement via an intermediate wheel with a fixed wheel (5) of the input shaft (2) and may be coupled with the output shaft (12) by means of a synchronizing clutch (F).

9. A gear-change transmission according to one of the preceding claims 1 to 7, characterized in that the synchronizing clutches (E and F) are combined to form a double clutch and together with the wheelset of the reverse gear (R) are arranged between the gears G5 and G6.

10. A gear-change transmission according to one of the preceding claims, comprising six forward gears of the gear transmissions i1, i2, i3, i4, i5, i6, characterized in that with respect to the progressive gear stepping the following equation applies:
i1/i2 = i3/i5 = i4/i6 = i3/i4 · i4/i5.

11. A gear-change transmission according to claim 1, characterized in that the size of the step jumps increases continuously towards the lower transmission gears (G2, G1).

## Revendications

1. Boîte de vitesses d'un véhicule automobile comportant un arbre d'entrée (2) et un arbre de sortie (12) parallèle avec plusieurs paires de pignons dentés, comportant plusieurs marches avant (G1 à G6) commutables par des accouplements de synchronisation et une marche arrière (R), caractérisée par
- une première paire de pignons dentés (6/17), dans un Premier montage en groupe pour la commutation de deux rapports voisins, et
- une seconde paire de pignons (7/18), qui est utilisée en double dans un second montage en groupe pour la commutation de deux rapports non voisins, ce qui fait qu'une graduation des rapports progressive est réalisée,
- toutes les marches avant étant disposées de manière qu'elles ne puissent être commutées que par fermeture simultanée de deux accouplements de synchronisation qui leur sont associés.

2. Boîte de vitesses selon la revendication 1, caractérisée en ce que lors de la commutation de toutes les marches avant est concerné un accouplement de synchronisation (C-D), qui suivant la position de son manchon coulissant (20), prend l'une de deux positions de fermeture et donne, dans sa position centrale neutre, le ralenti de la boîte de vitesses.

3. Boîte de vitesses selon la revendication 1 ou 2 avec six marches avant, caractérisée en ce que les rapports G2, G4, G5 et G6 sont constitués chacun d'une paire de pignons (6/17, 9/21, 7/18 et 8/10), en revanche le premier rapport G1 est formé par la paire de pignons (6/17) du rapport G2 et les rapports G4 et G6 commutés en engrenages en groupe, le troisième rapport G3 par la paire de pignons (7/18) du rapport G5 et les rapports G4 et G6 montés en engrenages en groupe.

4. Boîte de vitesses selon l'une des revendications précédentes, caractérisée par un premier arbre creux (3), monté sur l'arbre d'entrée (2) central, lequel arbre creux entraîne par la paire de pignons (8/10) un second arbre creux parallèle, dans lequel l'arbre de sortie (12) central est monté, la paire de pignons (8/10) formant la sixième rapport G6.

5. Boîte de vitesses selon les revendications 3 et 4, caractérisée en ce que sur l'arbre d'entrée (2) sont placées les pignons fixes (6, 7) des rapports G2 et G5 ainsi que sur le premier arbre creux (3), les pignons fixes (8, 10) des rapports G6 et G4, dans cet ordre.

6. Boîte de vitesses selon la revendication 4, caractérisée en ce que le premier arbre creux (3) peut être couplé au moyen d'un accouplement de synchronisation (E) avec l'arbre d'entrée (2) et le second arbre creux (11), au moyen d'un autre accouplement de synchronisation (C), avec l'arbre de sortie (12).

7. Boîte de vitesses selon l'une des revendications précédentes, caractérisée en ce que sur le second arbre creux (11) sont montés les pignons libres (17, 18) du deuxième et du cinquième rapports G2 et G5 et peuvent être reliés avec cet arbre creux par des accouplements de synchronisation (A) et (B), ces pignons libres (17, 18) engrenant avec les pignons fixes (6, 7) de l'arbre d'entrée (2).

8. Boîte de vitesses selon l'une des revendications précédentes, caractérisée en ce que sur l'arbre de sortie (12), sur l'un de ses côtés, est monté le pignon libre (21) du rapport G4, lequel engrène avec le pignon fixe (9) correspondant, calé sur le premier arbre creux (3), et en ce que sur l'autre côté de l'arbre de sortie (12), est monté le pignon libre (15) de la marche arrière (R), qui est en prise par un pignon intermédiaire, avec un pignon fixe (5) de l'arbre d'entrée (2) et peut être couplé au moyen d'un accouplement de synchronisation (F), avec l'arbre de sortie (12).

9. Boîte de vitesses selon l'une des revendications 1 à 7 précédentes, caractérisée en ce que les accouplements de synchronisation (E et F) sont réunis en un accouplement double et sont placés avec le jeu de pignons de la marche arrière (R), entre les rapports G5 et G6.

10. Boîte de vitesses selon l'une des revendications précédentes avec six marches avant des rapports i1, i2, i3, i4, i5, i6, caractérisée en ce que pour la graduation progressive des rapports, on a la relation : i1/i2 = i3/i5 i4/i6 = i3/i4 . i4/i5.

11. Boîte de vitesses selon la revendication 1, caractérisée en ce que la grandeur des écarts entre les degrés croît en continu vers les rapports inférieurs G2, G1.
